# EUROPÄISCHE PATENTSCHRIFT

(11) **EP 3 142 914 B1**
(45) Veröffentlichungstag und Bekanntmachung des Hinweises auf die Patenterteilung: **24.11.2021**
(21) Anmeldenummer: 15717126.5
(22) Anmeldetag: 09.04.2015
(51) Int. Cl.: B61B 13/12, B65G 15/00

(54) **TRANSPORTVORRICHTUNG ZUM TRANSPORT VON GÜTERN**
TRANSPORT DEVICE FOR TRANSPORTING GOODS
DISPOSITIF DE TRANSPORT POUR TRANSPORTER DES MARCHANDISES

(30) Priorität: 16.05.2014 DE 102014209378
(43) Veröffentlichungstag der Anmeldung: 22.03.2017
(73) Patentinhaber: Siemens Aktiengesellschaft, 80333 München (DE)
(72) Erfinder: ZISCH, Rainer, 78337 Öhningen (DE)
(74) Vertreter: Siemens Patent Attorneys
(86) Internationale Anmeldenummer: PCT/EP2015/057689
(87) Internationale Veröffentlichungsnummer: WO 2015/172944

(56) Entgegenhaltungen:
- EP-A1- 0 678 433
- US-A- 4 023 501
- US-A1- 2013 313 071
- None

## Beschreibung

Die Erfindung betrifft eine Transportvorrichtung zum Transport von Gütern, mit wenigstens einer Fahrspur und mit wenigstens einem Transportfahrzeug, das zum spurgebundenen Fahren auf der Transportspur und zum Transportieren der Güter ausgebildet ist, und das wenigstens einen fahrzeugseitigen Antrieb zum Bewegen des Transportfahrzeugs relativ zur Fahrspur aufweist, wobei die Fahrspur wenigstens einen spurseitigen Antrieb aufweist, mittels dem das Transportfahrzeug zumindest abschnittsweise relativ zur Fahrspur bewegbar ist.

Transportvorrichtungen der genannten Art sind aus dem Stand der Technik bekannt und beispielsweise in der EP0367972 B1 beschrieben. Dabei ist das Transportfahrzeug mit einem autonomen fahrzeugseitigen Antrieb versehen, durch den sich das Transportfahrzeug unabhängig von möglichen anderen Transportfahrzeugen auf der Fahrspur bewegen kann. Die Transportvorrichtung der EP0367972 B1 ist zum Transportieren von Werkstücken ausgebildet, alternativ können derartige Transportvorrichtungen aber auch zum Transportieren von Stückgütern, wie beispielsweise Gepäckstücken, Paketen oder ähnlichem verwendet werden. Weitere bekannte Transportvorrichtungen sind in den US 2013/313071 A1, EP 0 678 433 A1,

US 3,747,535, DE 40 32 487 C2 und DE 690 11 744 T2 beschrieben.

Der fahrzeugseitige Antrieb des Transportfahrzeugs, das auch als autonomes Fahrzeug bezeichnet werden kann, ist so ausgelegt,um das Transportfahrzeug auf eine vorbestimmte Normalgeschwindigkeit zu beschleunigen. Jedes Transportfahrzeug umfasst als fahrzeugseitigen Antrieb beispielsweise einen Elektromotor mit entsprechendem Getriebe und Reibrad. Eine geringe Normalgeschwindigkeit ist vorteilhaft, weil der Antrieb dadurch kostengünstiger sind, was bei einer großen Anzahl von autonomen Fahrzeugen erheblichen Kosteneinfluss hat. Auf der anderen Seite ist von der Normalgeschwindigkeit der Transportfahrzeuge auch der Durchsatz der Transportvorrichtung an transportierten Gütern pro Zeit der Transportvorrichtung abhängig.

Es ist daher die Aufgabe der vorliegenden Erfindung eine Transportvorrichtung der eingangs genannten Art bereitzustellen, die mit geringen Herstellungskosten herstellbar und trotzdem einen möglichst hohen Durchsatz ermöglicht.

Die Erfindung löst die Aufgabe für die oben genannte Transportvorrichtung dadurch, dass die Fahrspur wenigstens einen spurseitigen Antrieb aufweist, mittels dem das Transportfahrzeug zumindest abschnittsweise relativ zur Fahrspur bewegbar ist.

Die erfindungsgemäße Lösung hat den Vorteil, dass ein kostengünstiger fahrzeugseitiger Antrieb mit begrenzter Transportgeschwindigkeit eingesetzt werden kann und durch den spurseitigen Antrieb trotzdem eine weitere Beschleunigung des Transportfahrzeugs unabhängig vom fahrzeugseitigen Antrieb möglich ist. So kann ein höherer Durchsatz der Transportvorrichtung erreicht werden.

Die erfindungsgemäße Lösung kann durch vorteilhafte Ausgestaltungen weiterentwickelt werden, die unabhängig voneinander kombinierbar sind.

So kann der fahrzeugseitige Antrieb zum Bewegen des Transportfahrzeugs mit variabler und der spurseitige Antrieb zum Bewegen des Transportfahrzeugs mit konstanter Transportgeschwindigkeit ausgebildet sein. Dies hat den Vorteil, dass der spurseitige Antrieb relativ kostengünstig herstellbar ist und das Transportfahrzeug mit konstanter Geschwindigkeit bewegt. Durch den fahrzeugseitigen Antrieb mit variabler Transportgeschwindigkeit kann das Transportfahrzeug sehr flexibel, unabhängig von weiteren Fahrzeugen und angepasst auf die Fahrspur und die Transportsituation bewegt werden.

Um einen besonders sanften Übergang des Transportfahrzeugs auf einen Bereich der Fahrspur mit spurseitigem Antrieb zu ermöglichen, kann der spurseitige Antrieb wenigstens ein bewegliches Kontaktmittel aufweisen, wobei das bewegliche Kontaktmittel zumindest zeitweise so mit dem fahrzeugseitigen Antrieb in Wirkverbindung bringbar ist, dass eine Relativbewegung zwischen dem Transportfahrzeug und dem beweglichen Kontaktmittel erzeugbar ist. So kann der fahrzeugseitige Antrieb erst aktiviert werden, wenn das Transportfahrzeug bereits auf dem spurseitigen Antrieb ist. Durch den fahrzeugseitigen Antrieb wird dann das Transportfahrzeug zusätzlich beschleunigt während es von dem spurseitigen Antrieb bereits mit konstanter Geschwindigkeit bewegt wird.

Um den Übergang zum spurseitigen Antrieb zu optimieren, weist erfindungsgemäß die in einer Transportrichtung verlaufende Fahrspur wenigstens ein ortsfestes Kontaktmittel auf, das im Betrieb zeitweise mit dem fahrzeugseitigen Antrieb in Wirkverbindung steht und in der Transportrichtung mit einem Abstand zum spurseitigen Antrieb angeordnet ist. Der Abstand ist wenigstens so groß ausgebildet, dass der fahrzeugseitige Antrieb beim Vorbeifahren des Transportfahrzeugs zeitweise keine Wirkverbindung zur Fahrspur aufweist. So kann der fahrzeugseitige Antrieb in dem Bereich gestoppt werden, in dem keine Wirkverbindung zur Fahrspur vorhanden ist, und dadurch das Stoppen keine Auswirkungen auf den Vorschub des Transportfahrzeugs hat. Anschließend fährt das Transportfahrzeug mit gestopptem fahrzeugseitigen Antrieb auf den mit konstanter Geschwindigkeit laufenden spurseitigen Antrieb auf. Danach kann der fahrzeugseitige Antrieb erneut aktiviert und langsam beschleunigt werden, um die Transportgeschwindigkeit des Transportfahrzeugs über die des spurseitigen Antriebs hinaus zu erhöhen.

Um das Transportfahrzeug zu jedem Zeitpunkt auf der Fahrspur kontrollieren zu können, kann das Transportfahrzeug wenigstens zwei in der Transportrichtung hintereinander angeordnete fahrzeugseitige Antriebe aufweisen. So ist wenigstens einer der beiden fahrzeugseitigen Antriebe im Eingriff - also in Wirkverbindung - während der andere fahrzeugseitige Antrieb in der Lücke oder dem Abstand zwischen dem spurseitigem Antrieb und dem ortsfestem Kontaktmittel angeordnet ist. Alternativ kann dieser Vorteil auch dadurch erreicht werden, dass die Transportvorrichtung wenigstens zwei in der Transportrichtung hintereinander angeordnete und miteinander verbundene Transportfahrzeuge aufweist.

Um einen noch sanfteren Übergang des Transportfahrzeugs auf den spurseitigen Antrieb zu gewährleisten, kann die konstante Antriebsgeschwindigkeit des spurseitigen Antriebs im Wesentlichen gleich sein mit einer Normalgeschwindigkeit und der fahrzeugseitige Antrieb so ausgestaltet sein, dass der fahrzeugseitige Antrieb das Transportfahrzeug wenigstens auf die Normalgeschwindigkeit beschleunigt oder verlangsamt. Dadurch kann das Transportfahrzeug vor dem spurseitigen Antrieb auf die Normalgeschwindigkeit beschleunigt oder verlangsamt werden und somit sanft und ohne Ruckeln auf den sich mit Normalgeschwindigkeit angetriebenen spurseitigen Antrieb auflaufen. Um die maximale Geschwindigkeit des Transportfahrzeugs auf einfache Weise weiter zu erhöhen, kann die Transportvorrichtung wenigstens zwei in der Transportrichtung hintereinander angeordnete spurseitige Antriebe aufweisen, deren konstante Antriebsgeschwindigkeiten unterschiedlich sind. Um die fahrzeugseitigen Antriebe zwischen den hintereinander angeordneten spurseitigen Antrieben für einen ruckfreien Übergang abstoppen zu können, können die spurseitigen Antriebe in der Transportrichtung mit einem Abstand zueinander angeordnet sein. Der Abstand ist wenigstens so groß ausgebildet, dass der fahrzeugseitige Antrieb beim Vorüberfahren des Transportfahrzeugs zeitweise keine Wirkverbindung zur Fahrspur aufweist.

Um die Möglichkeiten der erfindungsgemäßen Transportvorrichtung optimal auszunutzen, können die jeweiligen Antriebsgeschwindigkeiten der spurseitigen Antriebe im Wesentlichen ganzzahlige Vielfache von einer Normalgeschwindigkeit sein und sich die Antriebsgeschwindigkeiten in der Transportrichtung jeweils um die einfache Normalgeschwindigkeit erhöhen oder erniedrigen. So kann der in der Transportrichtung erste spurseitige Antrieb mit Normalgeschwindigkeit angetrieben werden und der fahrzeugseitige Antrieb beschleunigt das Transportfahrzeug zusätzlich auf insgesamt die doppelte Normalgeschwindigkeit am Ende des ersten spurseitigen Antriebs. Da der in der Transportrichtung nächste spurseitige Antrieb auch mit doppelter Normalgeschwindigkeit betrieben ist, wird das Transportfahrzeug durch die gleichen Geschwindigkeiten ohne Ruckeln übergeben. Der fahrzeugseitige Antrieb wird beim Übergang vom ersten zum zweiten spurseitigen Antrieb gestoppt.

Um den fahrzeugseitigen Antrieb konstruktiv einfach auszubilden, kann der fahrzeugseitige Antrieb wenigstens ein Reibrad aufweisen.

Ferner kann der spurseitige Antrieb wenigstens ein Fördermittel aufweisen. Das Fördermittel kann beispielsweise ein Endlosförderband, eine Förderkette oder ähnliches sein. Dies hat den Vorteil, dass der spurseitige Antrieb konstruktiv einfach ausgebildet ist und auf bewährte Technik zurückgreifen kann.

Im Folgenden wird die Erfindung mit Bezug auf die beigefügten Zeichnungen erläutert.

Es zeigen:
- Figur 1: eine schematische Darstellung einer ersten Ausführungsform einer erfindungsgemäßen Transportvorrichtung in einer Seitenansicht;
- Figuren 2 - 8: eine schematische Darstellung der Ausführungsform in Figur 1 in anderen Positionen;
- Figur 9: eine schematische Darstellung einer weiteren beispielhaften Ausführungsform der erfindungsgemäßen Transportvorrichtung in einer Seitenansicht;
- Figur 10 - 16: eine schematische Darstellung der Ausführungsform der Figur 9 in anderen Positionen.

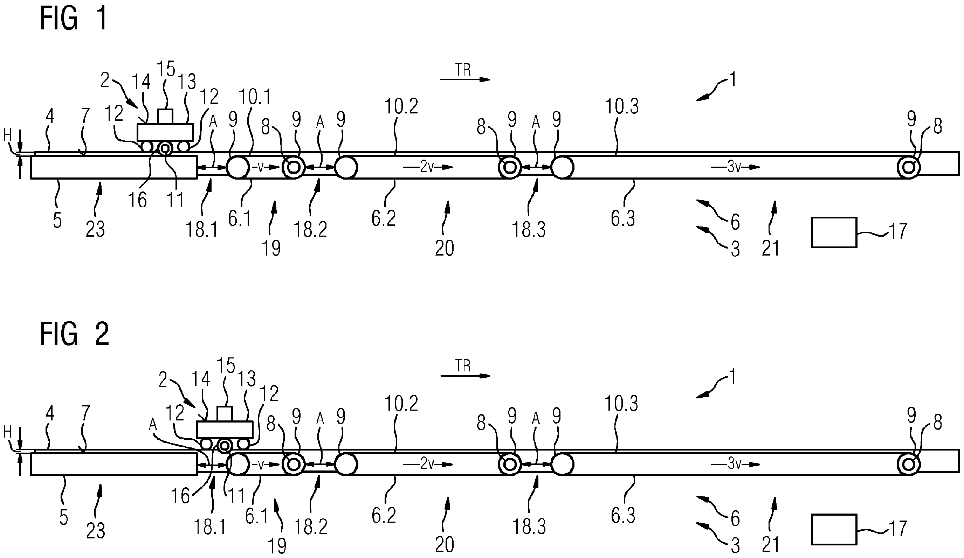

Zunächst wird die Erfindung mit Bezug auf die Figuren 1 - 8 und der darin dargestellten beispielhaften Ausführungsform beschrieben.

Figur 1 zeigt eine schematische Darstellung einer beispielhaften Ausführungsform der erfindungsgemäßen Transportvorrichtung 1, die wenigstens ein Transportfahrzeug 2 und eine Fahrspur 3 aufweist.

In Figur 1 ist lediglich ein Teil der Fahrspur 3 der erfindungsgemäßen Transportvorrichtung 1 dargestellt. Die Fahrspur 3 umfasst eine Laufschiene 4, eine Kontaktschiene 5 als Kontaktmittel, mehrere spurseitige Antriebe 6.1, 6.2, 6.3. und eine Steuerung 17.

Die Laufschiene 4 ist in bekannter Weise als eine Doppelschiene mit zwei parallel zueinander verlaufenden Einzelschienen ausgebildet. Die Kontaktschiene 5 ist als eine Einzelschiene ausgebildet und verläuft etwas unterhalb und parallel zur Laufschiene 4. Die Kontaktschiene 5 weist beispielsweise eine flache Kontaktfläche 7 auf, die parallel zur Laufschiene 4 verläuft. Die spurseitigen Antriebe 6 verlaufen ebenfalls in einer Schienenlängsrichtung der Laufschiene 4 und sind fluchtend mit der Kontaktschiene 5 zwischen den Einzelschienen der Laufschienen 4 angeordnet. Jeder spurseitige Antrieb 6.1, 6.2, 6.3 umfasst jeweils einen Antriebsmotor 8, Umlenkrollen 9 und ein Förderband 10. Die spurseitigen Antriebe 6 bei der beispielhaften Ausführungsform in Figur 1 sind als Förderbänder ausgebildet. Alternativ könnte auch ein Kettentrieb oder ein Seiltrieb verwendet werden.

Das Transportfahrzeug 2 ist auf der Fahrspur 3 angeordnet und weist einen fahrzeugseitigen Antrieb 11, Laufräder 12 und einen Fahrzeugkörper 13 auf. Der Fahrzeugkörper 13 ist zum Transport von Stückgütern 15, wie beispielsweise Gepäckstücken oder Paketen, ausgebildet. Der Fahrzeugkörper 13 weist bei der schematischen Darstellung in den Figuren 1 - 8 eine Aufnahmefläche 14 auf, auf der das Gut 15 aufgenommen und transportiert werden kann. Selbstverständlich kann der Fahrzeugkörper 13 anstatt der Aufnahmefläche 14 auch einen Crossbelt, eine Kippschale, eine andere Transportschale oder ähnliches zur Aufnahme der Güter 15 aufweisen.

Unterhalb des Fahrzeugkörpers 13 sind vier Laufräder 12 und der fahrzeugseitige Antrieb 11 angeordnet. Die Laufräder 12 sind so positioniert, dass sie auf der Laufschiene 4 laufen können und dass das Transportfahrzeug 2 auf der Fahrspur 3 schienengebunden bewegt werden kann. Jeweils zwei Laufräder 12 sind über eine nicht dargestellte Achse miteinander verbunden. Die Laufräder 12 sind nicht angetrieben.

Der fahrzeugseitige Antrieb 11 ist bei der Ausführungsform der Figuren 1 - 8 als ein Elektromotor mit Getriebe und einem Reibrad 16 ausgebildet. Alternativ zu dem Reibradantrieb wäre auch ein formschlüssiger Zahnradantrieb oder ähnliches denkbar. Das Reibrad 16 ist so angeordnet, dass es in Kontakt mit der Kontaktfläche 7 der Kontaktschiene 5 steht, wenn sich das Transportfahrzeug 2 in der in Figur 1 dargestellten Position auf der Fahrspur 3 befindet. Ein Abstand H zwischen der Auflagefläche der Laufräder 12 und der Auflagefläche des Reibrades 16 ist im Wesentlichen gleich mit dem Abstand H der Oberseite der Laufschiene 4 und der Kontaktfläche 7 der Kontaktschiene 5 oder der Oberfläche der Förderbänder 10 der spurseitigen Antriebe 6. Selbstverständlich kann der Abstand H zwischen Fahrspur 3 und Transportfahrzeug 2 leicht verändert werden, um eine größere Reibkraft des Reibrades 16 mit der Kontaktschiene 5 oder den Förderbändern 10 zu erreichen.

Die in einer Transportrichtung TR hintereinander angeordneten spurseitigen Antriebe 6.1, 6.2, 6.3 weisen zueinander und zur Kontaktschiene 5 jeweils einen Abstand A auf. Der Abstand A ist bei der Ausführungsform der Figuren 1 - 8 etwa doppelt so groß wie der Durchmesser des Reibrades 16.

Im Folgenden wird die Funktion der erfindungsgemäßen Transportvorrichtung 1 der Figuren 1 - 8 beschrieben.

In der in Figur 1 dargestellten Position ist das Transportfahrzeug 2 auf der Fahrspur 3 angeordnet und die Laufräder 12 laufen auf der Laufschiene 4. Der Kontakt zwischen den Laufrädern 12 und der Laufschiene 4 ist im Übrigen in allen in den Figuren 1 - 8 dargestellten Positionen gegeben. In der Position in Figur 1 bewegt sich das Transportfahrzeug 2 mit einer Normalgechwindigkeit v in der Transportrichtung TR. Der fahrzeugseitige Antrieb 11, der als Antrieb zum Bewegen des Transportfahrzeugs mit variabler Transportgeschwindigkeit ausgebildet ist, ist über das Reibrad 16 in Kontakt und somit in einer Wirkverbindung mit der Kontaktschiene 5. Die Kontaktschiene 5 ist relativ zur Laufschiene 4 ortsfest angeordnet. Bei der in Figur 1 dargestellten Bewegung des Transportfahrzeugs 2 mit der Normalgeschwindigkeit v hat der fahrzeugseitige Antrieb 11 seine maximale Antriebsleistung erreicht. Zwischen dieser maximalen Leistung und einem Stillstand des Reibrades 16 kann der fahrzeugseitige Antrieb 11 von der Steuerung 17 gesteuert werden. Die Steuerung 17 ist signaltechnisch mit dem fahrzeugseitigen Antrieb und den spurseitigen Antrieben 6 verbunden.

In der in Figur 2 dargestellten Position hat sich das Transportfahrzeug 2 in der Transportrichtung TR gegenüber der Positionen in Figur 1 fortbewegt und befindet sich in einem Freilaufabschnitt 18.1, der durch den Abstand A ausgebildet ist und in dem das Reibrad 16 weder Kontakt zur Kontaktschiene 5 noch zu einem der Förderbänder 10 hat. Aufgrund der Massenträgheit bewegt sich das Transportfahrzeug 2 weiterhin etwa mit der Normalgeschwindigkeit v, obwohl der fahrzeugseitige Antrieb 11 es nicht antreibt. Vielmehr ist der fahrzeugseitige Antrieb 11 von der Steuerung 17 gestoppt worden, sobald das Reibrad 16 den Freilaufabschnitt 18 erreicht hatte. Der in der Transportrichtung TR erste spurseitige Antrieb 6.1 wird mit einer im Wesentlichen konstanten Transportgeschwindigkeit v angetrieben. Aufgrund der Massenträgheit bewegt sich das Transportfahrzeug 2 auch im Freilaufabschnitt 18.1 mit der Normalgeschwindigkeit v. Wenn anschließend das gestoppte Reibrad 16 in Kontakt mit dem Förderband 10.1 des spurseitigen Antriebs 6.1 tritt, wird das Transportfahrzeug 2 vom spurseitigen Antrieb 6.1 mit der Normalgeschwindigkeit v in der Transportrichtung TR bewegt. Das Förderband 10.1 des spurseitigen Antriebs 6.1 in diesem ersten Beschleunigungsabschnitt 19 befindet sich in vertikaler Richtung auf gleicher Höhe H, wie die Kontaktschiene 5 in dem Normalabschnitt 23, in dem die Fahrspur 3 keinen spurseitigen Antrieb 6 aufweist.

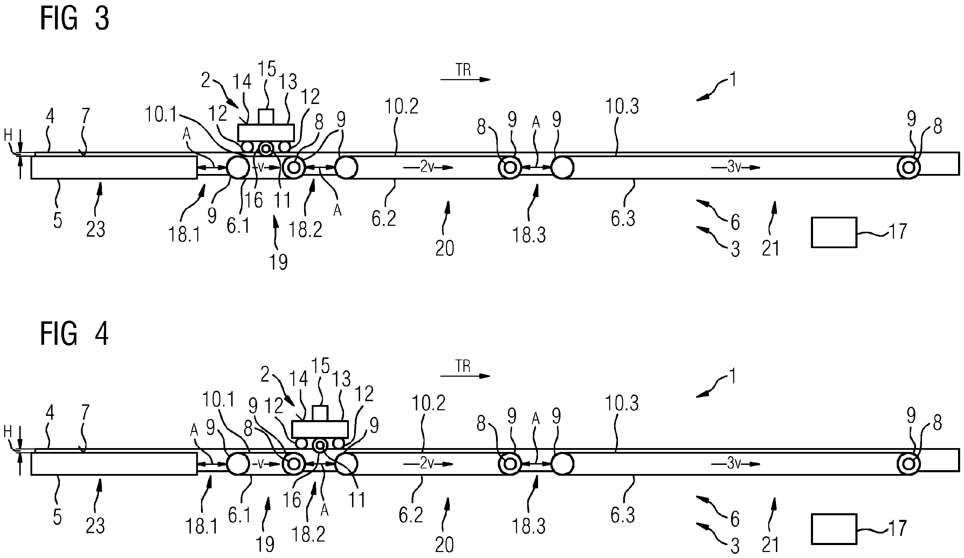

In der Position in Figur 3 steht das Reibrad 16 des fahrzeugseitigen Antriebs 11 in Wirkverbindung mit dem Förderband 10.1 des spurseitigen Antriebs 6.1. Beim Durchfahren dieses ersten Beschleunigungsabschnitts 19 wird das zunächst gestoppte Reibrad 16 nach und nach auf die maximale Leistung des fahrzeugseitigen Antriebs 11 beschleunigt, so dass eine Relativbewegung und Relativbeschleunigung zwischen dem Transportfahrzeug 2 und dem Förderband 10.1 des spurseitigen Antriebs 6.1 stattfindet. Dadurch wird das Transportfahrzeug 2 auf eine Transportgeschwindigkeit beschleunigt, die größer als die Normalgeschwindigkeit v ist. Am Ende des ersten Beschleunigungsabschnitts 19 bewegt sich das Transportfahrzeug 2 mit doppelter Normalgeschwindigkeit 2v.

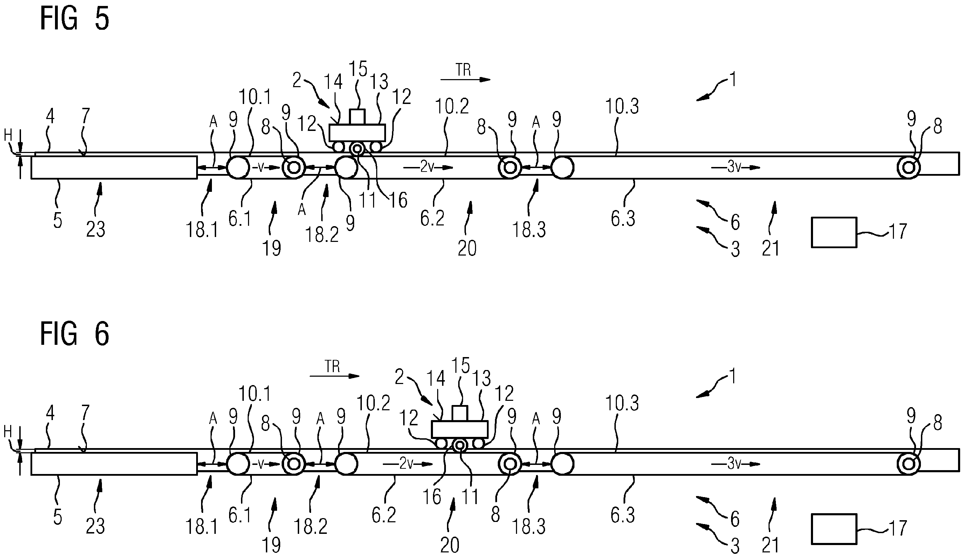

In der Position in Position 4 ist das Transportfahrzeug 2 in den nächsten Freilaufabschnitt 18.2 eingefahren, in dem die Steuerung 17 erneut den fahrzeugseitigen Antrieb 11 und das Reibrad 16 stoppt. Aufgrund der Massenträgheit wird das Transportfahrzeug 2 weiterhin etwa mit doppelter Normalgeschwindigkeit 2v in der Transportrichtung TR bewegt. In der Position in Figur 5 hat das Transportfahrzeug 2 bereits den zweiten Beschleunigungsabschnitt 20 erreicht, in dem das Reibrad 16 in Wirkverbindung mit dem Förderband 10.2 des nächsten spurseitigen Antriebs 6.2 steht. Bei dem Durchfahren des zweiten Beschleunigungsabschnitts 20, wie in den Figuren 5 und 6 dargestellt, wird die Leistung des fahrzeugseitigen Antriebs 11 von Null auf Maximalleistung gesteigert, so dass das Transportfahrzeug 2 den zweiten Beschleunigungsabschnitt 20 mit dreifacher Normalgeschwindigkeit 3v verlässt.

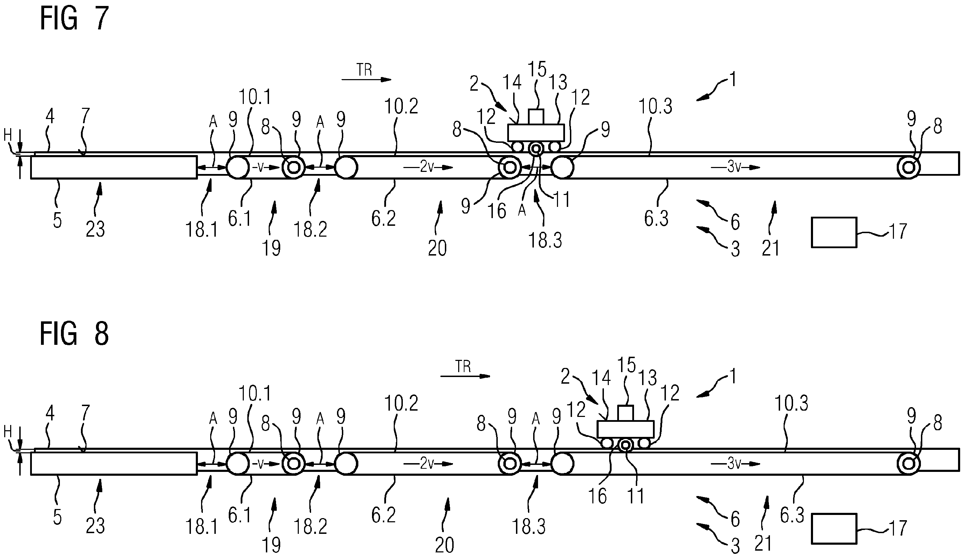

In Figur 7 hat das Transportfahrzeug 2 den nächsten Freilaufabschnitt 18.3 erreicht, in dem der fahrzeugseitige Antrieb 11 erneut abgeschaltet wird. Aufgrund der Massenträgheit wird das Transportfahrzeug 2 über den Freilaufabschnitt 18.3 hinweg in den dritten Beschleunigungsabschnitt 21 bewegt.

In der Position in Figur 8 befindet sich das Transportfahrzeug 2 im dritten Beschleunigungsabschnitt 21, in dem das Reibrad 16 des fahrzeugseitigen Antriebs 11 in Wirkverbindung - also in Kontakt oder in Eingriff - mit dem Förderband 10.3 des spurseitigen Antriebs 6.3 steht. Erneut wird der fahrzeugseitige Antrieb 11 beim Durchfahren des dritten Beschleunigungsabschnitts 21 von der Steuerung 17 bis zur Maximalleistung gebracht, so dass sich das Transportfahrzeug 2 am Ende des dritten Beschleunigungsabschnitts 21 auf die vierfache Normalgeschwindigkeit 4v beschleunigt hat.

Mit Hilfe der vorliegenden Erfindung kann das Transportfahrzeug 2 auf die mehrfache Normalgeschwindigkeit v beschleunigt werden, obwohl der fahrzeugseitige Antrieb 11 lediglich eine Beschleunigung bis zur Normalgeschwindigkeit v ermöglicht. Selbstverständlich können weitere spurseitige Antriebe 6 eingesetzt werden, um die Transportgeschwindigkeit des Transportfahrzeugs 2 weiter zu erhöhen. Um das Transportfahrzeug 2 nach erfolgter Beschleunigung wieder zu verlangsamen, können spurseitige Antriebe 6 eingesetzt werden, deren Geschwindigkeit sich in der Transportrichtung TR zueinander verlangsamen.

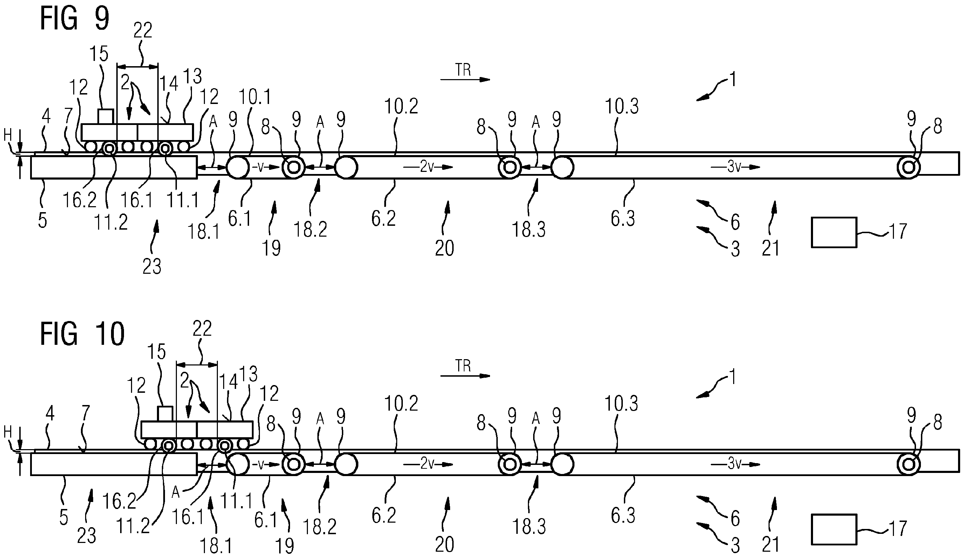

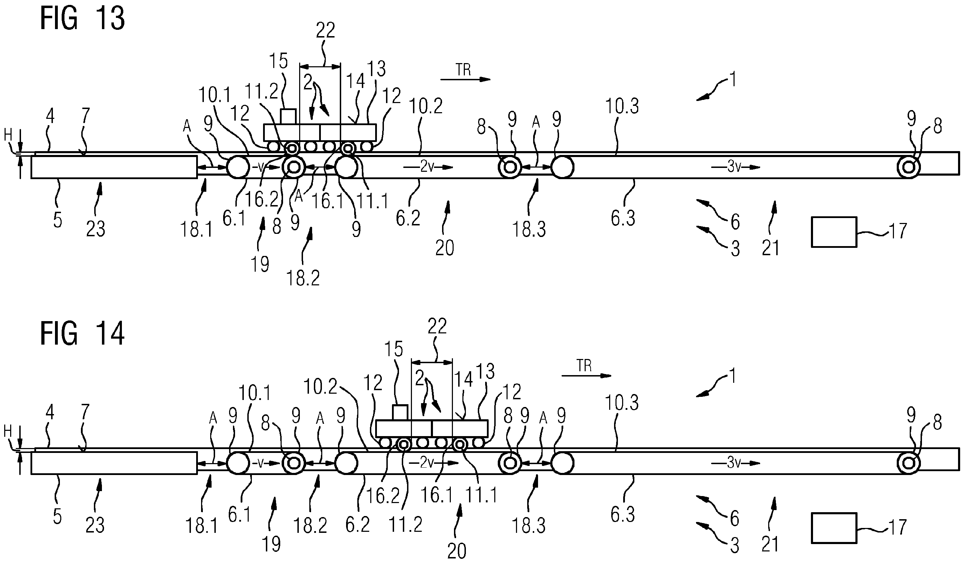

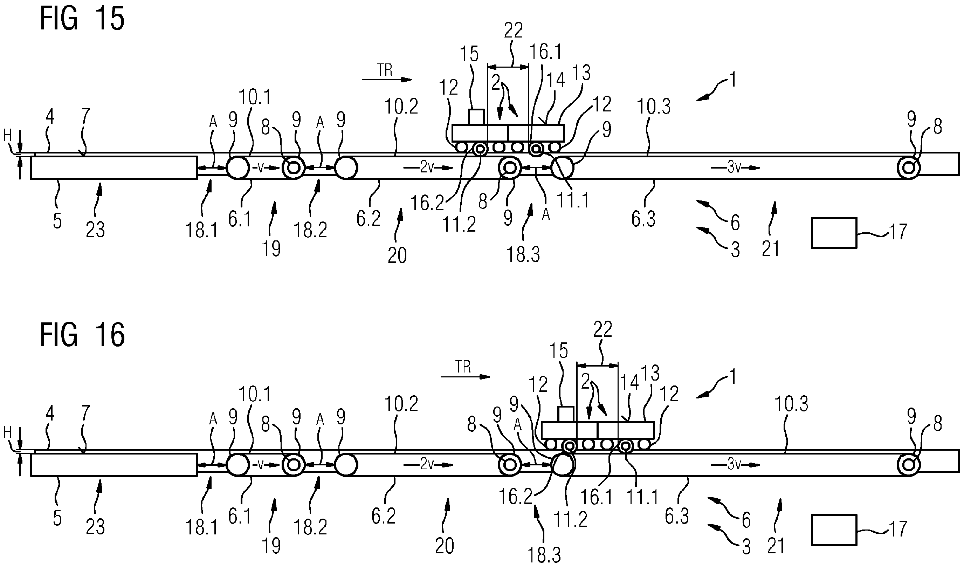

Im Folgenden wird die Erfindung mit Bezug auf die weitere beispielhafte Ausführungsform der Figuren 9 - 16 beschrieben. Der Einfachheit halber wird lediglich auf die Unterschiede zu der Ausführungsform der Figuren 1 - 8 eingegangen.

Das Transportfahrzeug 2 der Ausführungsform der Figuren 9 - 16 weist zwei fahrzeugseitige Antriebe 11 auf, die in Transportrichtung TR hintereinander angeordnet sind. Ein Abstand 22 zwischen den beiden fahrzeugseitigen Antrieben 11 ist größer als der Abstand A zwischen den spurseitigen Antrieben 6 beziehungsweise der Kontaktschiene 5. Ferner weist das Transportfahrzeug 2 vier Achsen mit jeweils zwei Laufrädern 12 auf, da das Transportfahrzeug 2 der Ausführungsform der Figuren 9 - 16 aus zwei Transportfahrzeugen 2 der Ausführungsform der Figuren 1 - 8 aufgebaut ist, die hintereinander angeordnet und miteinander verbunden sind. Alternativ könnte das Transportfahrzeug 2 der Ausführungsform der Figuren 9 - 16 auch nur zwei Achsen mit jeweils zwei Laufrädern 12 aufweisen, zwischen denen die beiden fahrzeugseitigen Antriebe 11 angeordnet sind.

In der in Figur 9 dargestellten Position befinden sich beide fahrzeugseitigen Antriebe 11 im Normalabschnitte 23 und in Kontakt mit der Kontaktschiene 5. Das Transportfahrzeug 2 bewegt sich mit Normalgeschwindigkeit v.

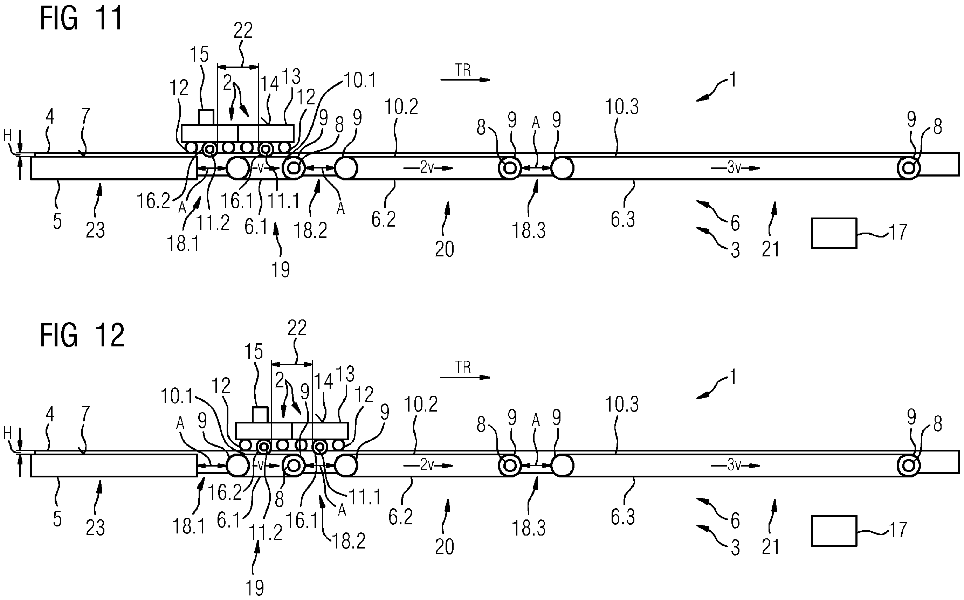

In der Position in Figur 10 hat der erste fahrzeugseitige Antrieb 11 mit seinem Reibrad 16 den ersten Freilaufabschnitt 18.1 erreicht. Die Steuerung 17 schaltet daher den ersten fahrzeugseitigen Antrieb 11.1 ab. Der zweite fahrzeugseitige Antrieb 11.2 mit seinem Reibrad 16.2 ist weiterhin in Wirkverbindung mit der Kontaktschiene 5. Der zweite fahrzeugseitige Antrieb 11.2 kann das Transportfahrzeug 2 solange antreiben, bis auch der zweite fahrzeugseitige Antrieb 11.2 den Freilaufabschnitt 18.1 erreicht hat, wie in Figur 11 dargestellt. Allerdings hat in dem Moment, in dem der zweite fahrzeugseitige Antrieb 11.2 den Freilaufabschnitt 18.1 erreicht hat, der erste fahrzeugseitige Antrieb 11.1 bereits den ersten Beschleunigungsabschnitt 19 erreicht und Kontakt mit dem Förderband 10.1. Daher hat das Transportfahrzeug 2 in der Ausführungsform der Figuren 9 - 16 zu jedem Zeitpunkt durch wenigstens einen der beiden fahrzeugseitigen Antriebe 11 Kontakt mit der Kontaktschiene 5 oder einem der spurseitigen Antriebe 6. So kann die Steuerung 17 zu jedem Zeitpunkt das Transportfahrzeug 2 kontrollieren und steuern. Sobald der zweite fahrzeugseitige Antrieb 11.2 die den Freilaufabschnitte 18.1 erreicht hat, kann der erste fahrzeugseitige Antrieb 11, der bereits den ersten Beschleunigungsabschnitt 19 erreicht hat, starten und das Transportfahrzeug 2 relativ zum Förderband 10.1 beschleunigen.

Wie bei der Ausführungsform der Figuren 1 - 8 erreicht das Transportfahrzeug 2 so am Ende des ersten Beschleunigungsabschnitts 19 die doppelte Normalgeschwindigkeit 2v, wie in Figur 12 dargestellt. In gleicher Weise bewegt sich das Transportfahrzeug 2 über die nächsten Freilaufabschnitte 18 und Beschleunigungsabschnitte 20, 21 um am Ende erneut auf vierfache Normalgeschwindigkeit 4v beschleunigt zu sein.

## Patentansprüche

1. Transportvorrichtung (1)zum Transport von Gütern (15),
mit wenigstens einer Fahrspur (3)und
mit wenigstens einem Transportfahrzeug (2), das zum spurgebundenen Fahren auf der Fahrspur (3) und zum Transportieren der Güter (15) ausgebildet ist und das wenigstens einen fahrzeugseitigen Antrieb (11, 11.1, 11.2)zum Bewegen des Transportfahrzeugs (2) relativ zur Fahrspur (3) aufweist, wobei
die Fahrspur (3) wenigstens einen spurseitigen Antrieb (6, 6.1, 6.2, 6.3) aufweist, mittels dem das Transportfahrzeug (2) zumindest abschnittsweise relativ zur Fahrspur (3) bewegbar ist,
**dadurch gekennzeichnet, dass** die in einer Transportrichtung (TR) verlaufende Fahrspur (3) wenigstens ein ortsfestes Kontaktmittel (5) aufweist, das im Betrieb zeitweise mit dem fahrzeugseitigen Antrieb (11) in Wirkverbindung steht und in der Transportrichtung (TR) mit einem Abstand (A) zum spurseitigen Antrieb (6) angeordnet ist, wobei
der Abstand (A) wenigstens so groß ausgebildet ist, dass der fahrzeugseitige Antrieb beim Vorbeifahren des Transportfahrzeugs (2) zeitweise keine Wirkverbindung zur Fahrspur (3) aufweist.

2. Transportvorrichtung (1) nach Anspruch 1, **dadurch gekennzeichnet, dass** der fahrzeugseitige Antrieb (11) zum Bewegen des Transportfahrzeugs (2) mit variabler und der spurseitige Antrieb (6) zum Bewegen des Transportfahrzeugs (2) mit konstanter Transportgeschwindigkeit ausgebildet ist.

3. Transportvorrichtung (1) nach Anspruch 1 oder 2, **dadurch gekennzeichnet, dass** der spurseitige Antrieb (6) wenigstens ein bewegliches Kontaktmittel (10, 10.1, 10.2, 10.3) aufweist, wobei das bewegliche Kontaktmittel (10) zumindest zeitweise so mit dem fahrzeugseitigen Antrieb (11) in Wirkverbindung bringbar ist, dass eine Relativbewegung zwischen dem Transportfahrzeug (2) und dem beweglichen Kontaktmittel (10) erzeugbar ist.

4. Transportvorrichtung (1) nach Anspruch 3, **dadurch gekennzeichnet, dass** die Transportvorrichtung (1) adaptiert ist, dass beim Vorbeifahren entlang des Abstandes (A) aufgrund der Massenträgheit sich das Transportfahrzeug (2) weiterhin etwa mit einer Normalgeschwindigkeit (v) bewegt, obwohl der fahrzeugseitige Antrieb (11) es nicht antreibt.

5. Transportvorrichtung (1) nach einem der oben genannten Ansprüche, dass das Transportfahrzeug (2) wenigstens zwei in der Transportrichtung (TR) hintereinander angeordnete fahrzeugseitige Antriebe (11.1, 11.2) aufweist.

6. Transportvorrichtung (1) nach einem der oben genannten Ansprüche,
**gekennzeichnet durch** wenigstens zwei in der Transportrichtung (TR) hintereinander angeordnete und miteinander verbundene Transportfahrzeuge (2).

7. Transportvorrichtung (1) nach einem der Ansprüche 2 bis 6,
**dadurch gekennzeichnet, dass** die konstante Antriebsgeschwindigkeit des spurseitigen Antriebs (6) im Wesentlichen gleich ist mit einer Normalgeschwindigkeit (v) und der fahrzeugseitige Antrieb (11) so ausgestaltet ist, dass der fahrzeugseitige Antrieb (11) das Transportfahrzeug (2) wenigstens auf die Normalgeschwindigkeit (v) beschleunigt oder verlangsamt.

8. Transportvorrichtung (1) nach einem der Ansprüche 2 bis 7,
**gekennzeichnet durch** wenigstens zwei in der Transportrichtung (2) hintereinander angeordnete spurseitige Antriebe (6), deren konstante Antriebsgeschwindigkeiten unterschiedlich sind.

9. Transportvorrichtung (1) nach Anspruch 8, **dadurch gekennzeichnet, dass** die spurseitigen Antriebe (6) in der Transportrichtung (TR) mit dem Abstand (A) zueinander angeordnet sind.

10. Transportvorrichtung (1) nach einem der Ansprüche 8 bis 9, **dadurch gekennzeichnet, dass** die jeweiligen Antriebsgeschwindigkeiten der spurseitigen Antriebe (6) im Wesentlichen ganzzahlige Vielfache von einer Normalgeschwindigkeit (v) sind und sich die Antriebsgeschwindigkeiten in der Transportrichtung (TR) jeweils um die einfache Normalgeschwindigkeit (v) erhöhen oder erniedrigen.

11. Transportvorrichtung (1) nach einem der oben genannten Ansprüche,
**dadurch gekennzeichnet, dass** der fahrzeugseitige Antrieb (11) wenigstens ein Reibrad (16) aufweist.

12. Transportvorrichtung (1) nach einem der oben genannten Ansprüche,
**dadurch gekennzeichnet, dass** der spurseitige Antrieb (6) wenigstens ein Fördermittel (10) aufweist.

## Claims

1. Transport device (1) for transporting goods (15), having at least one track (3) and
having at least one transport vehicle (2) which is designed to travel on the track (3) and to transport the goods (15) and which has at least one on-board drive (11, 11.1, 11.2) for moving the transport vehicle (2) relative to the track (3), wherein the track (3) has at least one in-track drive (6, 6.1, 6.2, 6.3) by means of which the transport vehicle (2) can be moved relative to the track (3) at least in sections, **characterised in that**
the track (3) running in a direction of travel (TR) has at least one fixed contact means (5) which during operation is temporarily operatively connected to the on-board drive (11) and is disposed at a distance (A) from the in-track drive (6) in the direction of travel (TR), wherein
the distance (A) is made at least large enough to ensure that the on-board drive is temporarily not operatively connected to the track (3) during passage of the transport vehicle (2).

2. Transport device (1) according to claim 1,
**characterised in that** the on-board drive (11) is designed to move the transport vehicle (2) at a variable transport speed and the in-track drive (6) is designed to move the transport vehicle (2) at a constant transport speed.

3. Transport device (1) according to claim 1 or 2, **characterised in that** the in-track drive (6) has at least one movable contact means (10, 10.1, 10.2, 10.3), wherein the movable contact means (10) can be operatively connected to the in-track drive (11) at least temporarily such that a relative movement between the transport vehicle (2) and the movable contact means (10) can be produced.

4. Transport device (1) according to claim 3,
**characterised in that** the transport device (1) is adapted such that, during passage along the distance (A), because of the inertia, the transport vehicle (2) continues to move at approximately a normal speed (v), although the on-board drive (11) is not driving it.

5. Transport device (1) according to one of the preceding claims,
**characterised in that** the transport vehicle (2) has at least two on-board drives (11.1, 11.2) disposed one behind the other in the direction of travel (TR).

6. Transport device (1) according to one of the preceding claims,
**characterised by** at least two transport vehicles (2) disposed one behind the other in the direction of travel (TR) and connected together.

7. Transport device (1) according to one of claims 2 to 6, **characterised in that** the constant drive speed of the in-track drive (6) is essentially identical to a normal speed (v) and the on-board drive (11) is designed such that the on-board drive (11) accelerates or decelerates the transport vehicle (2) to at least the normal speed (v).

8. Transport device (1) according to one of claims 2 to 7, **characterised by** at least two in-track drives (6) disposed one behind the other in the direction of travel (TR), the constant drive speeds of which are different.

9. Transport device (1) according to claim 8,
**characterised in that** the in-track drives (6) are disposed at a distance (A) from one another in the direction of travel (TR) .

10. Transport device (1) according to one of claims 8 to 9, **characterised in that** the respective drive speeds of the in-track drives (6) are essentially integral multiples of a normal speed (v) and the drive speeds are increased or reduced by 1x normal speed (v) in the direction of travel (TR).

11. Transport device (1) according to one of the preceding claims,
**characterised in that** the on-board drive (11) has at least one friction wheel (16).

12. Transport device (1) according to one of the preceding claims,
**characterised in that** the in-track drive (6) has at least one conveying means (10).

## Revendications

1. Dispositif de transport (1) pour le transport de marchandises (15), avec au moins une voie de circulation (3) et avec au moins un véhicule de transport (2), qui est conçu pour la circulation liée à la voie sur la voie de circulation (3) et pour le transport des marchandises (15) et qui comprend au moins un entraînement côté véhicule (11, 11.1, 11.2) pour le déplacement du véhicule de transport (2) par rapport à la voie de circulation (3), dans lequel
la voie de circulation (3) comprend au moins un entraînement côté voie (6, 6.1, 6.2, 6.3), au moyen duquel le véhicule de transport (2) est mobile au moins par endroits par rapport à la voie de circulation (3),
**caractérisé en ce que**
la voie de circulation (3) s'étendant dans une direction de transport (TR) comprend au moins un moyen de contact fixe (5), qui, en fonctionnement, coopère par moments avec l'entraînement côté véhicule (11) et est disposé dans la direction de transport (TR) à une distance (A) de l'entraînement côté voie (6), dans lequel
la distance (A) est au moins d'une grandeur telle que l'entraînement côté véhicule, lors du passage du véhicule de transport (2), ne comprenne par moments aucune liaison fonctionnelle avec la voie de circulation (3).

2. Dispositif de transport (1) selon la revendication 1,
**caractérisé en ce que**
l'entraînement côté véhicule (11) est conçu pour le déplacement du véhicule de transport (2) avec une vitesse de transport variable et l'entraînement côté voie (6) est conçu pour le déplacement du véhicule de transport (2) avec une vitesse de transport constante.

3. Dispositif de transport (1) selon la revendication 1 ou la revendication 2,
**caractérisé en ce que**
l'entraînement côté voie (6) comprend au moins un moyen de contact mobile (10, 10.1, 10.2, 10.3), dans lequel le moyen de contact mobile (10) peut être amené au moins par moments à coopérer avec l'entraînement côté véhicule (11) de sorte qu'un déplacement relatif puisse être créé entre le véhicule de transport (2) et le moyen de contact mobile (10).

4. Dispositif de transport (1) selon la revendication 3,
**caractérisé en ce que**
le dispositif de transport (1) est adapté pour que, lors du passage le long de la distance (A), en raison de l'inertie de masse, le véhicule de transport (2) se déplace encore environ avec une vitesse normale (v), même si l'entraînement côté véhicule (11) ne l'entraîne pas.

5. Dispositif de transport (1) selon l'une des revendications mentionnées ci-dessus, tel que le véhicule de transport (2) comprend au moins deux entraînements côté véhicule (11.1, 11.2) disposés l'un derrière l'autre dans la direction de transport (TR).

6. Dispositif de transport (1) selon l'une des revendications mentionnées ci-dessus,
**caractérisé par**
au moins deux véhicules de transport (2) disposés l'un derrière l'autre dans la direction de transport (TR) et reliés l'un à l'autre.

7. Dispositif de transport (1) selon l'une des revendications 2 à 6,
**caractérisé en ce que**
la vitesse d'entraînement constante de l'entraînement côté voie (6) est sensiblement identique à une vitesse normale (v) et l'entraînement côté véhicule (11) est constitué de sorte que l'entraînement côté véhicule (11) accélère ou ralentisse le véhicule de transport (2) au moins jusqu'à la vitesse normale (v).

8. Dispositif de transport (1) selon l'une des revendications 2 à 7,
**caractérisé par**
au moins deux entraînements côté voie (6) disposés l'un derrière l'autre dans la direction de transport (TR), dont les vitesses d'entraînement constantes sont différentes.

9. Dispositif de transport (1) selon la revendication 8,
**caractérisé en ce que**
les entraînements côté voie (6) sont disposés dans la direction de transport (TR) à la distance (A) l'un de l'autre.

10. Dispositif de transport (1) selon l'une des revendications 8 à 9,
**caractérisé en ce que**
les vitesses d'entraînement respectives des entraînements côté voie (6) sont des multiples sensiblement entiers d'une vitesse normale (v) et les vitesses d'entraînement dans la direction de transport (TR) s'élèvent ou s'abaissent respectivement de la simple vitesse normale (v).

11. Dispositif de transport (1) selon l'une des revendications mentionnées ci-dessus,
**caractérisé en ce que**
l'entraînement côté véhicule (11) comprend au moins une roue de friction (16).

12. Dispositif de transport (1) selon l'une des revendications mentionnées ci-dessus,
**caractérisé en ce que**
l'entraînement côté voie (6) comprend au moins un moyen transporteur (10).
